# EUROPÄISCHE PATENTSCHRIFT

(11) **EP 0 516 205 B1**
(45) Veröffentlichungstag und Bekanntmachung des Hinweises auf die Patenterteilung: **15.03.1995**
(21) Anmeldenummer: 92201257.0
(22) Anmeldetag: 05.05.1992
(51) Int. Cl.: B01D 53/34, B01D 53/14, G05D 21/02

(54) **Verfahren zum Regeln des pH-Wertes einer sauren Waschflüssigkeit**
Control method for the pH-value of an acid scrubbing solution
Méthode de la régulation du pH d'un liquide de lavage acide

(30) Priorität: 28.05.1991 DE 4117382
(43) Veröffentlichungstag der Anmeldung: 02.12.1992
(73) Patentinhaber: METALLGESELLSCHAFT Aktiengesellschaft, 60015 Frankfurt (DE)
(72) Erfinder: Stegemann, Bertold, W-6000 Frankfurt am Main (DE); Kloos, Günter, W-6056 Heusenstamm (DE)

(56) Entgegenhaltungen:
- EP-A- 0 237 464
- EP-A- 0 456 042
- US-A- 4 416 855

## Beschreibung

Die Erfindung betrifft ein Verfahren zum Regeln des pH-Wertes einer sauren Waschflüssigkeit, die mit einem pH-Wert kleiner 3 in einer Waschzone eingesetzt wird, zum Entfernen von sauren Bestandteilen aus einem Gas dient und mindestens teilweise im Kreislauf geführt wird.

In der EP-B-0 076 683 ist ein System zur Kontrolle des pH-Wertes eines kontinuierlichen Flüssigkeitsstromes beschrieben, bei welchem ein pH-Wert-Analysator die Zuspeisung von Säure oder Lauge zur Flüssigkeit steuert, um den pH-Wert konstant zu halten. Für das Verfahren der eingangs genannten Art ist das bekannte Verfahren jedoch nicht geeignet, weil so der pH-Wert der sauren Waschflüssigkeit nicht störungsfrei und kostengünstig über lange Zeit laufend gemessen werden kann. Beim eingangs genannten Verfahren arbeitet man deshalb erfindungsgemäß so, daß man einen konstanten Teilstrom der Waschflüssigkeit mit einem Laugestrom mit konstanter Konzentration und konstantem Volumen pro Zeiteinheit mischt, den pH-Wert der Mischung laufend mißt, den Sollwert des pH-Wertes der Mischung auf einen Wert im Bereich von 5 bis 9 einstellt und bei Absinken des gemessenen pH-Wertes eine neutrale oder alkalische Korrekturflüssigkeit der Waschflüssigkeit zugibt.

Beim Verfahren der Erfindung findet somit die mehr oder weniger kontinuierliche pH-Wert-Messung an einer Flüssigkeit statt, die durch ihren pH-Wert im Bereich von 5 bis 9, vorzugsweise 6 bis 8 und z.B. 7 nicht oder kaum aggressiv ist. Dies ermöglicht eine genauere pH-Wert-Messung und verlängert die Lebensdauer der Meßeinrichtung, zusätzlich erreicht man eine höhere Empfindlichkeit des Meßverfahrens.

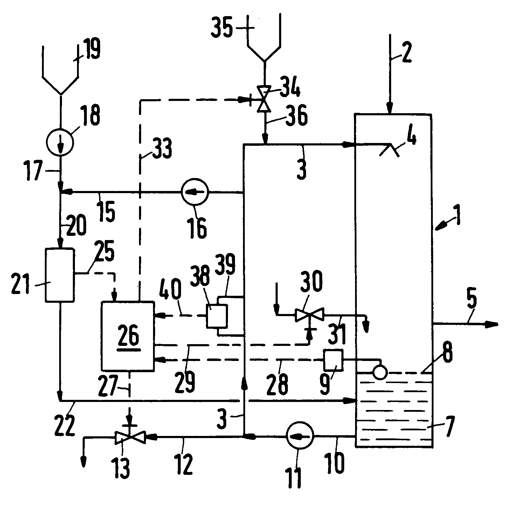

Ausgestaltungsmöglichkeiten des Verfahrens werden mit Hilfe der Zeichnung erläutert.

Das im Waschturm (1) von sauren Bestandteilen zu befreiende Gas wird in der Leitung (2) herangeführt. Bei dem Gas kann es sich z.B. um ein Abgas handeln, das z.B. HCl und HF als saure Bestandteile enthält. Ein solches Abgas kommt z.B. aus einer Müllverbrennungsanlage.

Dem Waschturm (1) wird durch die Leitung (3) eine Waschflüssigkeit zugeführt, die im Fall der Behandlung eines Abgases aus einer Müllverbrennungsanlage hauptsächlich aus Wasser besteht. Durch einen oder mehrere Verteiler (4) wird die Waschflüssigkeit in das Gas hinein versprüht. Behandeltes Gas strömt in der Leitung (5) ab, es kann, falls erforderlich, einer weiteren Reinigung unterzogen werden.

Im Sumpf (7) des Waschturms (1) sammelt sich gebrauchte Waschflüssigkeit bis zum Flüssigkeitsniveau (8), das von einem Niveauregler (9) überwacht wird. Die Waschflüssigkeit wird zum Teil im Kreislauf geführt, wobei sie durch die Leitung (10) und die Kreislaufpumpe (11) den Turm (1) verläßt und größtenteils durch die Leitung (3) zurückgeführt wird. Die Waschflüssigkeit in der Leitung (10) hat üblicherweise einen pH-Wert von höchstens 2. Eine einstellbare Menge der Waschflüssigkeit zieht man durch die Leitung (12) und das Regelventil (13) ab.

Um den pH-Wert der dem Waschturm (1) zugeführten Waschflüssigkeit mit nur geringen Schwankungen konstant zu halten, dient folgende Regelung: Man zieht durch die Leitung (15) über die Dosierpumpe (16) einen konstanten, relativ kleinen Teilstrom der durch die Leitung (3) strömenden Waschflüssigkeit ab und mischt sie mit einem definierten Laugestrom, der in der Leitung (17) durch eine Dosierpumpe (18) herangeführt wird. Die Lauge mit konstantem pH-Wert, z.B. Natronlauge, kommt aus einem Vorratsbehälter (19). Die Lauge in der Leitung (17), die ebenso wie die Flüssigkeit in der Leitung (15) mit konstantem Volumen pro Zeiteinheit gefördert wird, vermischt sich in der Leitung (20) mit dem Teilstrom der Waschflüssigkeit. Dabei wird dafür gesorgt, daß der Meßeinrichtung (21) zum Messen des pH-Wertes Flüssigkeit mit einem pH-Sollwert zugeführt wird, der üblicherweise im Bereich von 5 bis 9, vorzugsweise im Bereich von 6 bis 8 und z.B. bei 7 liegt. Dieser Sollwert wird durch Regulieren der von den Dosierpumpen (16) und (18) herangeführten Mengen eingestellt. Die aus dem Meßgerät (21) kommende Flüssigkeit gibt man in der Leitung (22) zurück in den Waschturm (1).

Das pH-Wert-Meßgerät (21) liefert kontinuierlich Meßergebnisse durch die Signalleitung (25) zu einem Steuergerät (26). Bei deutlichem Absinken des gemessenen pH-Wertes gegenüber dem Sollwert kann der pH-Wert der Waschflüssigkeit auf zweierlei Weise wieder angehoben werden: Ein schwacher Regelungseingriff besteht darin, daß vom Steuergerät (26) durch die Signalleitung (27) das Ventil (13) zeitweise geöffnet wird, wodurch Waschflüssigkeit aus dem Verfahren entfernt wird. Dadurch sinkt der Flüssigkeitsspiegel (8) im Waschturm (1), was durch den Niveauregler (9) festgestellt wird. Dieser Regler (9) informiert durch die Signalleitung (28) das Steuergerät (26), welches durch die Signalleitung (29) ein Ventil (30) öffnet, durch welches Wasser durch die Leitung (31) für eine gewisse Zeit in den Sumpf (7) des Turmes (1) geleitet wird, bis das ursprüngliche Flüssigkeitsniveau (8) wieder erreicht ist. Die Zugabe von Frischwasser zur Waschflüssigkeit erhöht deren pH-Wert. Eine weitere Möglichkeit zur stärkeren pH-Wert-Korrektur besteht darin, über das Steuergerät (26) durch die Signalleitung (33) ein Ventil (34) zu öffnen, durch welches eine alkalische Korrekturflüssigkeit aus einem Vorratsbehälter (35) durch die Leitung (36) der Waschflüssigkeit der Leitung (3) zugemischt wird. Bei dieser alkalischen Korrekturflüssigkeit kann es sich z.B. um Natronlauge handeln.

Beim erfindungsgemäßen Verfahren wird dafür gesorgt, daß Waschflüssigkeit durch die Leitung (12) und das Ventil (13) nur in möglichst geringer Menge aus dem Verfahren entfernt wird. Es kann zweckmäßig sein, den Salzgehalt der Waschflüssigkeit der Leitung (3) zu überwachen. Hierzu eignet sich ein Dichtemeßgerät (38), welches über eine Bypass-Leitung (39) mit der Leitung (3) verbunden ist. Dieses Gerät (38) informiert das Steuergerät (26) durch eine Signalleitung (40), so daß das Steuergerät bei Überschreiten des zulässigen Salzgehaltes durch die Signalleitung (27) das Ventil (13) zeitweise öffnen und Waschflüssigkeit abziehen kann. Über den Niveauregler (9) wird dann automatisch Frischwasser durch das zeitweise geöffnete Ventil (30) dem Waschflüssigkeitskreislauf zugeführt.

An die Stelle des Steuergerätes (26) können optische Anzeigen der Geräte (9), (21) und (38) treten, die eine Bedienungsperson veranlassen, die Ventile (13), (30) und (34) in der beschriebenen Weise zu betätigen. Der Niveauregler (9) kann auch direkt auf das die Frischwasserzufuhr freigebende Ventil (30) einwirken.

### Beispiel

In einer der Zeichnung entsprechenden Anlage wird folgendermaßen gearbeitet, wobei die Daten teilweise berechnet sind:
Durch die Leitung (2) wird ein Rauchgas mit 250°C aus einer Müllverbrennungsanlage in einer Menge von 85 000 Nm³/h (trocken gerechnet) herangeführt, es enthält 1 250 mg HCl/Nm³. Dem Waschturm (1) gibt man durch die Leitung (3) 300 m³/h saures Waschwasser mit einem pH-Wert von 0,25 auf, das pro kg Waschwasser 20 g HCl enthält. 90 % des dem Waschturm (1) zugeführten HCl werden aus dem Rauchgas entfernt. Pro Stunde zieht man durch die Leitung (12) 4 781 kg Waschwasser ab und führt durch die Leitung (31) 14 230 kg Frischwasser als Ersatz für Verluste durch Verdampfung und Ableitung durch die Leitung (12) zu.

Zum Messen des pH-Wertes des Waschwassers zweigt man durch die Leitung (15) pro Stunde 40 l Waschwasser ab, die mit 2 l Natronlauge (30 Gew.% NaOH) aus der Leitung (17) gemischt werden. Der dabei im Meßgerät (21) gemessene pH-Sollwert ist 7.

Durch eine plötzliche Veränderung in der Zusammensetzung des Rauchgases werden dem Waschturm (1) pro Stunde nur noch 1 000 mg HCl zugeführt, wodurch der HCl-Gehalt im Waschwasser der Leitung (3) auf nur noch 16 g/l sinkt, der pH-Wert im Waschwasser steigt auf 0,35. Im Meßgerät (21) steigt der pH-Wert auf 13. Um diesen pH-Wert wieder auf den Sollwert von 7 zu bringen, wird die Ableitung von Waschwasser durch das Ventil (13) auf 3 825 kg/h verringert, wobei sich auch der Zulauf von Frischwasser durch die Leitung (31) verringert.

Bei der gleichen plötzlichen Veränderung der Zusammensetzung des Rauchgases kann man alternativ auch durch Zugabe von Natronlauge (30 Gew.% NaOH) durch die Leitung (36) gegensteuern. Hierzu sind 165 kg Natronlauge pro Stunde bei einem Abzug von 800 kg/h Waschwasser durch die Leitung (12) erforderlich, der Salzgehalt im Waschwasser im Sumpf (7) erhöht sich dadurch um 120 g pro kg Waschwasser. Der pH-Wert im Meßgerät (21) wird auch hierdurch auf den Sollwert von 7 zurückgeführt.

## Patentansprüche

1. Verfahren zum Regeln des pH-Wertes einer sauren Waschflüssigkeit, die mit einem pH-Wert kleiner 3 in einer Waschzone eingesetzt wird, zum Entfernen von sauren Bestandteilen aus einem Gas dient und mindestens teilweise im Kreislauf geführt wird, dadurch gekennzeichnet, daß man einen konstanten Teilstrom der Waschflüssigkeit mit einem Laugestrom mit konstanter Konzentration und konstantem Volumen pro Zeiteinheit mischt, den pH-Wert der Mischung laufend mißt, den Sollwert des pH-Wertes der Mischung auf einen Wert im Bereich von 5 bis 9 einstellt und bei Absinken des gemessenen pH-Wertes eine neutrale oder alkalische Korrekturflüssigkeit der Waschflüssigkeit zugibt.

2. Verfahren nach Anspruch 1, dadurch gekennzeichnet, daß die Waschflüssigkeit hauptsächlich aus Wasser besteht.

3. Verfahren nach Anspruch 1 oder 2, dadurch gekennzeichnet, daß die aus der Waschzone abgezogene Waschflüssigkeit einen pH-Wert von höchstens 2 aufweist.

4. Verfahren nach Anspruch 1 oder einem der folgenden, dadurch gekennzeichnet, daß die Korrekturflüssigkeit aus Wasser besteht.

5. Verfahren nach Anspruch 1 oder einem der folgenden, dadurch gekennzeichnet, daß man den Salzgehalt der Waschflüssigkeit mißt und bei zu hohem Salzgehalt einen Teil der Waschflüssigkeit aus dem Kreislauf entfernt und durch Wasser ersetzt.

6. Verfahren nach Anspruch 1 oder einem der folgenden, dadurch gekennzeichnet, daß man die aus der pH-Wert-Messung ablaufende Flüssigkeitsmischung der Waschflüssigkeit zuführt.

## Claims

1. A method of controlling the pH of an acidic scrubbing liquid which is used at a pH less than 3 in a scrubber zone, serves to remove acidic components from a gas, and is at least partially recycled, characterised in that a constant partial stream of the scrubbing liquid is mixed with an alkaline stream having a constant concentration and which is supplied at a constant volume per unit time, the pH of the mixture is continuously measured, the desired value of the pH of the mixture is adjusted to a value in the range from 5 to 9 and a neutral or alkaline correcting liquid is added to the scrubbing liquid when the measured pH falls.

2. A method according to claim 1, characterised in that the scrubbing liquid mainly consists of water.

3. A method according to claim 1 or 2, characterised in that the scrubbing liquid taken off from the scrubbing zone has a pH value of 2 at most.

4. A method according to claim 1 or one of the following claims, characterised in that the correcting liquid consists of water.

5. A method according to claim 1 or one of the following claims, characterised in that the salt content of the scrubbing liquid is measured and if the salt content is too high part of the scrubbing liquid is removed from the circuit and replaced by water.

6. A method according to claim 1 or one of the following claims, characterised in that the liquid mixture flowing off from the pH measurement is fed to the scrubbing liquid.

## Revendications

1. Procédé de régulation du pH d'un liquide de lavage acide, qui est utilisé en ayant un pH inférieur à 3 dans une zone de lavage, qui sert à éliminer des constituants acides d'un gaz et qui circule au moins en partie en circuit fermé, caractérisé en ce qu'il consiste à mélanger par unité de temps un courant partiel constant du liquide de lavage à un courant de lessive de concentration constante et de volume constant, à mesurer en continu le pH du mélange, à régler la valeur de consigne du pH du mélange à une valeur comprise entre 5 et 9, et, si le pH mesuré s'abaisse, à ajouter au liquide de lavage un liquide de correction neutre ou alcalin.

2. Procédé suivant la revendication 1, caractérisé en ce que le liquide de lavage est principalement de l'eau.

3. Procédé suivant la revendication 1 ou 2, caractérisé en ce que le liquide de lavage soutiré de la zone de lavage a un pH de 2 au plus.

4. Procédé suivant la revendication 1 ou l'une des suivantes, caractérisé en ce que le liquide de correction est de l'eau.

5. Procédé suivant la revendication 1 ou l'une des suivantes, caractérisé en ce qu'il consiste à mesurer la teneur en sel du liquide de lavage et, si la teneur en sel est trop grande, à enlever une partie du liquide de lavage du circuit et à la remplacer par de l'eau.

6. Procédé suivant la revendication 1 ou l'une des suivantes, caractérisé en ce qu'il consiste à envoyer le mélange de liquide sortant de la mesure du pH au liquide lavage.
